# EUROPEAN PATENT APPLICATION

(11) **EP 2 395 747 A2**
(43) Date of publication of application: **14.12.2011**
(21) Application number: 11168931.1
(22) Date of filing: 07.06.2011
(51) Int. Cl.: H04N 5/232

(54) **Three-dimensional-camera lens system**

(30) Priority: 08.06.2010 JP 2010131194
(71) Applicant: FUJIFILM Corporation, Tokyo (JP)
(72) Inventor: Matsuura, Yuji, Saitama, 331-9624 (JP)
(74) Representative: Klunker . Schmitt-Nilson . Hirsch

(57) **Abstract**

A three-dimensional-camera lens system capable of easily adjusting an optical axis and obtaining a three-dimensional image free from improper feelings by adjusting the optical axis of a lens device (image-pickup optical system) by using an antivibration optical system of an image-blur correcting device when the image-blur correcting device is used in a three-dimensional camera is provided. In each of left and right lens devices used in the three-dimensional camera, an antivibration lens group (40) for preventing image blur caused by vibrations is disposed in an image-pickup optical system. A movement instructing device (54A) which adjusts, by manual operation, a reference position at which the vibration lens group (40) is fixedly held when antivibration control is stopped is provided in an operation unit (50) about the vibration control. An improper feeling of a three-dimensional image caused by optical-axis misalignment can be reduced by adjusting the reference position of the antivibration lens group (40) by the movement instructing device.

## Description

### BACKGROUND OF THE INVENTION

### Field of the Invention

The present invention relates to a three-dimensional-camera lens system, and particularly relates to a three-dimensional-camera lens system provided with a plurality of image-pickup optical systems which are attached to a three-dimensional camera, which picks up three-dimensional images (three-dimensional video), from object images having parallax on image-pickup planes of a plurality of image-pickup devices of the three-dimensional camera.

### Description of Related Art

For example, a three-dimensional camera which picks up three-dimensional images (three-dimensional video) for binocular stereoscopic vision by parallelly disposing left and right two TV cameras and picking up the parallax images for the right eye (right side) and for the left eye (left side) is known.

In the three-dimensional camera, lens devices having the same specifications are used as image-pickup optical systems of left and right cameras in order to pickup three-dimensional images free from improper feelings. Also regarding the control of the lens devices, image-pickup conditions of zoom (focal length), focus (focal-point position), etc. have to be always matched in the left and the right. Therefore, for example, one of them serves as a master, and the other serves as a subordinate; and, if the image-pickup conditions of the master-side lens device are changed, the image-pickup conditions of the subordinate-side lens device are changed in coordination with the change.

Incidentally, in the lens devices of the three-dimensional camera as described above, the optical axes of the left and right two lens devices (image-pickup optical systems) are sometimes misaligned from planned optical axes due to production errors and processing errors of parts of the lens devices and camera main bodies or the errors caused upon assembly thereof or due to variations in the positions, angles, etc. of the lens devices upon attachment to the camera main bodies. When the optical axes are misaligned, the positional relation of the same object in the left and right parallax images is inappropriate, and there is a problem that an improper feeling as a three-dimensional image is generated.

Japanese Patent Application Laid-Open No. 2007-52060 proposes a technique in which coupling members are respectively interposed at the attachment parts (mount parts) of camera main bodies and lens devices (lens barrels), and the positions of the left and right lens devices supported by the coupling members are adjusted vertically and horizontally by screw positions of screws, thereby adjusting the optical center thereof (optical-axis adjustment).

Recently, along with increase in the magnification of zooming of a lens device, an image-blur correcting device (antivibration device) which corrects image blur is often incorporated in a lens device. Known image-blur correcting devices include, for example, an image-blur correcting device which is disposed in an optical system of a lens device so as to be movable in the direction orthogonal to the optical axis of an image-blur-correcting antivibration lens and drives the antivibration lens by a motor when vibrations are applied to a camera (image-pickup optical system of the camera) to cancel out the image-blur caused by the vibrations (for example, see Japanese Patent Application Laid-Open No. 2003-107554). Moreover, other than the method using the antivibration lens moved in the direction orthogonal to the optical axis, a method of correcting the image-blur is known; wherein, in optical image-blur correction, an image displacing device which vertically/horizontally displaces the image formation position of the image, which is formed by an optical system, optically in the image-pickup plane is provided, and image-blur correction is carried out by controlling the displacement amount of the image displaced by the image displacing device so as to cancel out the image blur. An image-blur correcting device of an adapter type which is used by externally attaching the device to a lens device as an attachment device is also known (for example, see Japanese Patent Application Laid-Open No. H6-189181).

Furthermore, there is also proposed a technique in which lens devices provided with image-blur correcting devices (lens devices equipped with an antivibration function) are used also in a three-dimensional camera so that image-blur correction free from the improper feeling can be carried out in three-dimensional images by suppressing the difference between the antivibration characteristics of the lens devices (for example, see Japanese Patent Application Laid-Open No. 2007-33624).

Incidentally, when coupling members such as that of Japanese Patent Application Laid-Open No. 2007-52060 are used in relation to the optical-axis adjustment of lens devices (image-pickup optical systems) of a three-dimensional camera, there is a defect that the number of constituent members of the system is increased, and there is a problem that attachment of the lens devices to the camera main bodies requires labor.

On the other hand, today, usage of image-blur correcting devices is becoming common, and the chance to use an image-blur correcting device is expected to increase also in three-dimensional cameras. In this case, the image-blur correcting device corresponds to the action of moving an optical axis of a lens device, and the action can be utilized for optical-axis adjustment.

### SUMMARY OF THE INVENTION

The present invention has been accomplished in view of foregoing circumstances, and it is an object of the present invention to provide a three-dimensional-camera lens system capable of easily carrying out optical-axis adjustment of lens devices (image-pickup optical systems) in the case in which an image-blur correcting device is used in a three-dimensional camera.

In order to achieve the above described object, a three-dimensional-camera lens system according to a first aspect has: a plurality of image-pickup optical systems respectively forming images of an object on image-pickup planes of a plurality of image-pickup devices of a three-dimensional camera for picking up a three-dimensional image; an antivibration optical system disposed in the image-pickup optical system, the antivibration optical system changing an image formation position of the image formed by the image-pickup optical system in a plane of the image-pickup plane by changing a state of the antivibration optical system in the image-pickup optical system; a driving device driving the antivibration optical system to change the state of the antivibration optical system; a vibration detecting device detecting a vibration of the image-pickup optical system; an antivibration control device changing the state of the antivibration optical system by the driving device based on the vibration detected by the vibration detecting device and changing the image formation position of the image formed by the optical system with respect to the image-pickup plane so as to carry out antivibration control of canceling out image blur caused by the vibration; an inputting device inputting an instruction about drive of the antivibration optical system disposed in each of the plurality of image-pickup optical systems; and an optical-axis adjustment control device driving the antivibration optical system for adjusting an optical axis of the image-pickup optical system by the driving device in accordance with the instruction input by the inputting device when the antivibration control of the antivibration control device is stopped.

According to the present invention, when the antivibration optical system for image-blur correction is disposed in an image-pickup optical system of a three-dimensional camera, the image formation position in the image-pickup plane can be adjusted by adjusting the state of the antivibration optical system when the antivibration control is stopped; therefore, the optical-axis adjustment of the image-pickup optical systems can be easily carried out by utilizing an image-blur correcting device.

In the three-dimensional-camera lens system according to a second aspect of the invention according to the first aspect, the antivibration optical system is an antivibration lens disposed displaceably in a direction orthogonal to the optical axis of the image-pickup optical system, and the image formation position of the image formed by the image-pickup optical system is changed in the plane of the image-pickup plane by changing the position of the antivibration lens as the state of the antivibration optical system changed by the driving device.

The present invention limits the form of the image-blur correcting device and shows the aspect to which the image-blur correcting device which prevents image-blur by moving the antivibration lens in the direction orthogonal to the optical axis is applied.

In the three-dimensional-camera lens system according to a third aspect of the invention according to the first or second aspect, the state of the antivibration optical system when the antivibration control is stopped is a reference state used when the state of the antivibration optical system is to be changed upon execution of the antivibration control.

The state of the antivibration optical system adjusted when the antivibration control is stopped is applied also as the reference state when the antivibration control is to be executed; and the reference state used when the antivibration control is to be executed is used, for example, as the initial state used when the antivibration control is to be started and as the state for keeping the system still when there is no vibration.

According to the present invention, in the case in which the image-blur correcting device is used in the three-dimensional camera, the optical-axis adjustment of the lens devices (image-pickup optical systems) can be easily carried out by utilizing the image-blur correcting device.

### BRIEF DESCRIPTION OF THE DRAWINGS

Figs. 1A and 1B are external views showing a three-dimensional camera equipped with a three-dimensional-camera lens system according to an embodiment of the present invention; and
Fig. 2 is a block diagram showing the constitution of a main part of a vibration detecting unit and antivibration units of the three-dimensional-camera lens system to which the present invention is applied.

### DETAILED DESCRIPTION OF THE PREFERRED EMBODIMENTS

Hereinafter, a preferred embodiment of a three-dimensional-camera lens system according to the present invention will be explained in accordance with accompanying drawings.

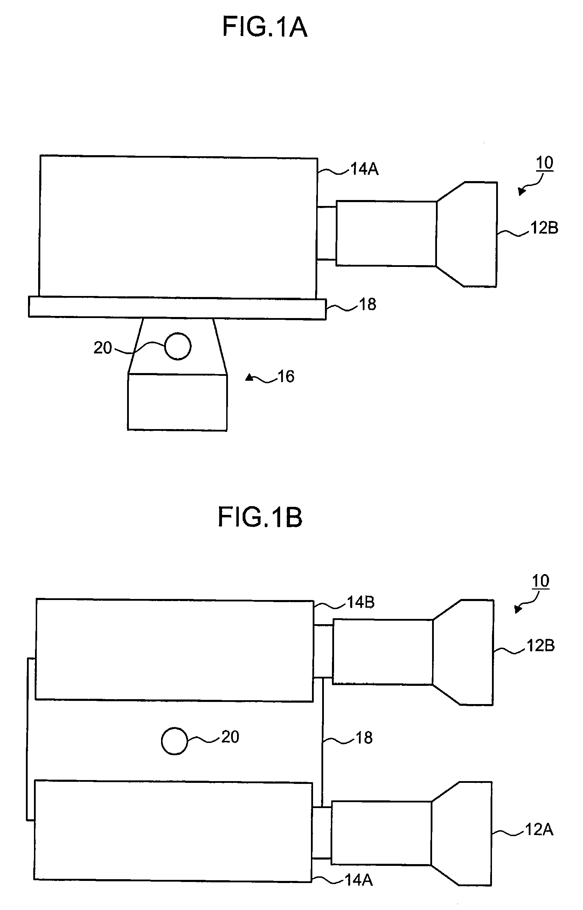

Fig. 1 is an external view showing a three-dimensional camera equipped with the three-dimensional-camera lens system according to the embodiment of the present invention. Fig. 1A is a side view, and Fig. 1B is a top plan view. As shown in the drawings, the three-dimensional-camera lens system 10 of the embodiment includes two lens devices 12A and 12B having the same specifications. The lens devices 12A and 12B are attached to camera main bodies 14A and 14B of a three-dimensional camera (three-dimensional TV camera) for taking three-dimensional images (parallax images), wherein the lens devices are attached by mounting thereon in a juxtaposed manner. For example, the lens device 12A is used for taking right-eye images, and the lens device 12B is used for taking left-eye images. In the below description, the lens devices 12A and 12B are described as right lens 12A and left lens 12B, respectively.

The camera main bodies 14A and 14B are respectively provided with image-pickup devices, which subject object images formed by optical image-pickup systems of the right lens 12A and the left lens 12B to photoelectric conversion; and, as shown in Fig. 1A, the camera main bodies 14A and 14B are placed on a plate 18 attached to a camera platform 16. Only one vibration detecting unit 20 is provided on the camera platform 16. As descried above, the right lens 12A and the left lens 12B are attached to the camera main bodies 14A and 14B, respectively; and the camera main bodies 14A and 14B are placed on the plate 18. Therefore, the right lens 12A and the left lens 12B integrally carry out the operation of pan or tilt, and the vibrations applied to the right lens 12A and the left lens 12B become approximately the same and detected by the single vibration detecting unit 20.

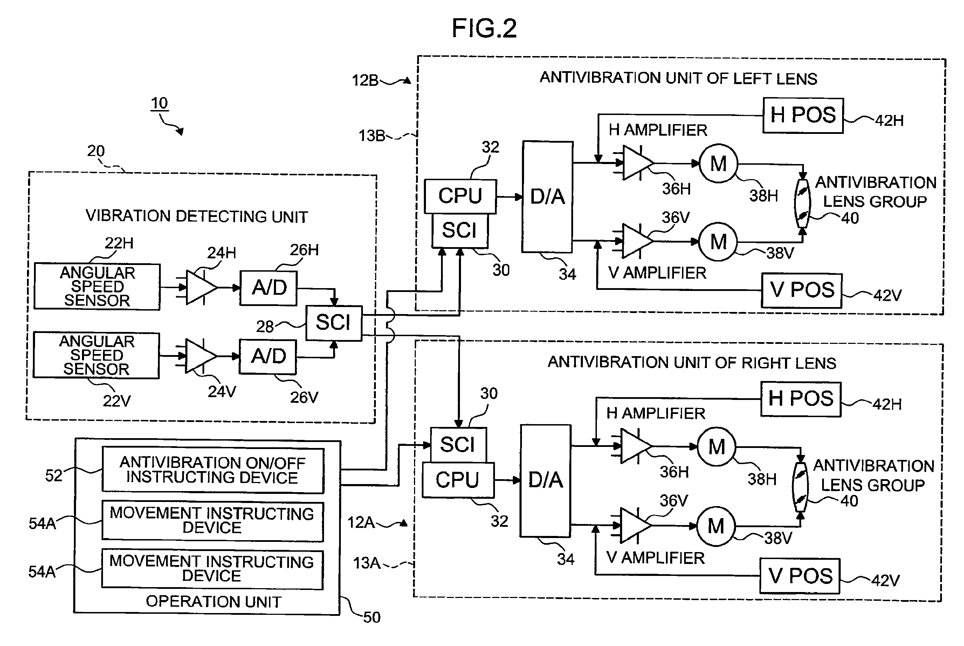

Fig. 2 is a block diagram showing the constitution of a main part of the vibration detecting unit and antivibration units of the three-dimensional-camera lens system 10 to which the present invention is applied. As shown in the diagram, in the three-dimensional-camera lens system 10 of the embodiment, the antivibration units 13A and 13B are provided for the right lens 12A and the left lens 12B, respectively, while only the single vibration detecting unit 20 is provided therefor.

The vibration detecting unit 20 is provided with vibration sensors, which detect the vibrations applied to the three-dimensional-camera lens system 10, wherein the vibration sensors are common to the right lens 12A and the left lens 12B. In the embodiment, the vibration sensors are disposed at, for example, at the positions equally distant from the respective lens devices 12A and 12B, at the positions of the center of gravity of the plate 18 on which the camera main bodies 14 are placed, or at the positions on the pan axis of the camera platform 16.

The vibration sensors are angular speed sensors (22H and 22V, respectively), which detect the horizontal and vertical angular speeds, and the angular speed sensors output electric signals (angular speed signals) S1 of the voltages corresponding to the angular speeds detected by the angular speed sensors 22H and 22V. The angular speed signals S 1 output from the angular speed sensors 22H and 22V are respectively input to and amplified by amplifiers 24H and 24V, converted to digital signals S2 by A/D converters 26H and 26V, and input to a serial communication interface 28 (SCI: Serial Communication Interface). Then, the digital signals S2 are input via the SCI 30 to the antivibration units 13A and 13B mounted in the right lens 12A and the left lens 12B. Instead of the angular speed sensors 22H and 22V, arbitrary vibration sensors which output the signals corresponding to vibrations such as speed sensors and acceleration sensors can be used.

As shown in the drawing, the antivibration units 13A and 13B of the right lens 12A and the left lens 12B include CPUs 32, D/A converter 34, amplifiers 36, antivibration-lens driving motors 38, antivibration lens groups 40, and potentiometers 42. In the drawing, the same constituent elements in the antivibration units 13A and 13B of the right lens 12A and the left lens 12B are denoted by the same reference characters.

In the right lens 12A and the left lens 12B, the antivibration lens groups 40 are respectively disposed in the image-pickup optical systems for forming the object images, wherein the optical systems are composed of focus lenses (groups), zoom lenses (groups), irises, etc.; and each of the antivibration lens groups is supported so as to be movable in the direction orthogonal to the optical axis of the image-pickup optical system.

The CPUs 32 are control units which control the image-pickup optical systems of the right lens 12A and the left lens 12B. The CPUs 32 obtain the digital signals S2 from the angular speed sensors 22H and 22V, thereby obtaining the angular speeds of the vibrations applied to the three-dimensional-camera lens system 10 and the camera main bodies 14A and 14B. Then, based on the angular speeds, the positions for correcting (preventing) the image blur of the antivibration lens groups 40 disposed in the image-pickup optical systems of the right lens 12A and the left lens 12B (hereinafter, referred to as image-blur correcting positions) are obtained, and position order signals S3H and S3V which order the antivibration lens groups 40 to horizontally and vertically move to the image-blur correcting positions, respectively, are output to the H amplifiers 36H and the V amplifiers 36V via the D/A converters 34.

The potentiometers 42H and 42V detect the horizontal and vertical positions of the antivibration lens groups 40 and output position detection signals (S4H and S4V, respectively) indicating the horizontal and vertical positions of the antivibration lens groups 40 to the H amplifier 36H and the V amplifier 36V, respectively.

The H amplifiers 36H and the V amplifiers 36V supply voltages to the antivibration-lens driving motors 38H and 38V based on the position order signals S3H and S3V and the position detection signals S4H and S4V. As a result, the antivibration-lens driving motors 38H and 38V are driven, and the antivibration lens groups 40 are displaced in the direction perpendicular to the optical axis of the respective image-pickup optical systems so as to be moved to the image-blur correction positions which correct the image blur caused by vibrations.

Incidentally, order signals from an operation unit 50 are configured to be input to the CPUs 32 of the antivibration units 13A and 13B. The operation unit 50 is, for example, connected to both of the right lens 12A and the left lens 12B by, for example, cables and is provided with an operation member about the antivibration units 13A and 13B. The operation unit 50 may have any form such as a unit incorporated in a controller provided with the operation member about the basic lens operations such as focusing and zooming of the right lens 12A and the left lens 12B or units individually provided for the right lens 12A and the left lens 12B, respectively.

The operation unit 50 is provided with an antivibration on/off instructing device (for example, on/off switch) 52, which instructs the antivibration units 13A and 13B to execute or stop antivibration control, and movement instructing devices 54A and 54B for adjusting the reference positions of the antivibration lens groups 40.

The movement instructing devices 54A and 54B are devices for adjusting the reference positions at which the antivibration lens groups 40 are fixedly held when the antivibration control is stopped. The movement instructing devices 54A and 54B are separately provided for the respective antivibration units 13A and 13B so that the vertical movement and the horizontal movement of the antivibration lens groups 40 of the antivibration units 13A and 13B can be instructed by an operator. For example, the movement instructing device 54A has a grip for specifying the vertical movement position of the antivibration lens group 40 of the antivibration unit 13A and a grip for specifying the horizontal movement position thereof so that the operator can input the instruction to move the antivibration lens group 40 to a desired position by using the grips.

The CPUs 32 of the antivibration units 13A and 13B obtain the instruction signals transmitted from the operation unit 50, for example, via the SCI 30 and executes control in accordance with the obtained instruction signals.

More specifically, when the CPUs 32 obtain, from the operation unit 50, the instruction signals instructing execution of the antivibration control based on the antivibration on/off instructing device 52 of the operation unit 50, the antivibration lens groups 40 are controlled based on the blur signals (the angular speed signals from the angular speed sensors 22H and 22V) from the vibration detecting unit 20 as described above to execute the antivibration control for preventing image blur.

On the other hand, when the instruction signals instructing stoppage of the antivibration control based on the antivibration on/off instructing device 52 are obtained from the operation unit 50, the antivibration lens groups 40 are set to be in the state in which the antivibration lens groups are stopped at the predetermined reference positions.

When the CPUs 32 obtain the instruction signals, which instruct the vertical or horizontal movement of the antivibration lens groups 40 based on the movement instructing devices 54A and 54B of the operation unit 50, from the operation unit 50 while the antivibration control is stopped, the CPUs 32 move the antivibration lens groups 40 vertically or horizontally in accordance with the instructions. Then, the positions at which the lens groups are stopped are set as reference positions.

The reference position of each of the antivibration lens groups 40 is normally set at the position where the center (optical axis) of the antivibration lens group 40 matches the optical axis of the whole image-pickup optical system (the other part of the optical system excluding the antivibration lens group 40), wherein, at the position, the position of the image formed by the image-pickup optical system is not displaced by the antivibration lens group 40 is set.

The optical axes of the image-pickup optical systems are sometimes misaligned from planned optical axes when the right lens 12A and the left lens 12B are attached to the camera main bodies 14A and 14B; in that case, the positional relation of the same object in the images picked up by image-pickup elements of the camera main bodies 14A and 14B is not appropriate, and there is a problem that the three-dimensional image thereof cause an improper feeling.

Therefore, the reference positions of the antivibration lens groups 40 are adjusted by using the movement instructing devices 54A and 54B of the operation unit 50 in the above described manner to intentionally displace the image formation positions of the images in the image-pickup plane; as a result, the optical axes of the image-pickup optical systems can be adjusted so that the positional relation of the same object in the images picked up by the image-pickup elements of the camera main bodies 14A and 14B become appropriate.

For example, images of a predetermined object are picked up, for example, before formal image-pickup, and the images picked up by the image-pickup elements of the camera main bodies 14A and 14B are checked. At this point, the positions of the antivibration lens groups 40 can be adjusted by the movement instructing devices 54A and 54B so that the object of which images have been picked up can be appropriately observed as three-dimensional images. In the case of the optical-axis adjustment of two image-pickup optical systems of the right lens 12A and the left lens 12B like the embodiment, only the reference position of the antivibration lens group 40 of one of the right lens 12A and the left lens 12B instead of both of the right and left lenses can be configured to be adjustable.

The adjustment of the reference positions of the antivibration lens groups 40 is not only effective as optical-axis adjustment of the case in which the antivibration control is stopped, but also is capable of reducing the improper feeling of the three-dimensional image caused by the misalignment of the optical axes also upon execution of the antivibration control by causing the adjustment positions to be the reference positions of the antivibration lens groups 40 upon execution of the antivibration control. More specifically, upon execution of the antivibration control, the position of the antivibration lens group 40 upon start of the antivibration control or in the case in which no vibration is generated is set to be the predetermined position. The reference position is, for example, the position serving as the center of the operation (average position) of the antivibration lens group 40 when image blur is to be prevented upon generation of sine-wave vibrations; and, depending on the mode of the antivibration control, the center of the operation of the antivibration lens group 40 is also gradually changed to the reference position along with the antivibration operation when the antivibration lens group 40 is operated to prevent image blur with respect to arbitrary vibrations. In the above described embodiment, the reference position of the antivibration lens group 40 adjusted upon stoppage of the antivibration control is caused to be the reference position used upon execution of the antivibration control; as a result, also upon execution of the antivibration control, three-dimensional images can be obtained without the improper feeling.

Hereinabove, in the above described embodiment, the case in which image blur is prevented by the antivibration lens group 40 which is displaced in the direction perpendicular to the optical axis of the image-pickup optical system has been described. However, the present invention can be also applied to the case in which a lens device equipped with an image-blur correcting device of another method is used. The present invention can be applied to the case in which the image formation position of the image formed by an image-pickup optical system is displaced in an image-pickup plane by changing the state of an antivibration optical system disposed in the image-pickup optical system, and the displacement of the image formation position changes the state of the antivibration optical system so as to cancel out the image blur caused by vibrations.

In the above described embodiment, the three-dimensional camera having the two image-pickup optical systems has been described. However, the present invention can be applied also to a three-dimensional camera having two or more image-pickup optical systems (and image-pickup devices).

In the above described embodiment, the mode in which the image-blur correcting device is incorporated in each lens device together with the antivibration lens group 40 disposed in the image-pickup optical system has been described. However, an adapter-type image-blur correcting device attached between a lens device and a camera main body (rear end of the lens device) is also known; and, if the reference position of an antivibration lens group can be moved to a desired position by an instruction by manual operation in such an image-blur correcting device as well as the above described embodiment, the adapter-type image-blur correcting device can be also utilized in the above described optical-axis adjustment.

## Claims

1. A three-dimensional-camera lens system (10) comprising:
a plurality of image-pickup optical systems (12A, 12B) respectively forming images of an object on image-pickup planes of a plurality of image-pickup devices of a three-dimensional camera for picking up a three-dimensional image, **characterized by** comprising:
an antivibration optical system (13A, 13B) disposed in the image-pickup optical system, the antivibration optical system changing an image formation position of the image formed by the image-pickup optical system in a plane of the image-pickup plane by changing a state of the antivibration optical system in the image-pickup optical system;
a driving device driving the antivibration optical system to change the state of the antivibration optical system;
a vibration detecting device (20) detecting a vibration of the image-pickup optical system;
an antivibration control device (32) changing the state of the antivibration optical system by the driving device based on the vibration detected by the vibration detecting device and changing the image formation position of the image formed by the optical system with respect to the image-pickup plane so as to carry out antivibration control of canceling out image blur caused by the vibration;
an inputting device (50) inputting an instruction about driving of the antivibration optical system disposed in each of the plurality of image-pickup optical systems; and
an optical-axis adjustment control device driving the antivibration optical system for adjusting an optical axis of the image-pickup optical system by the driving device in accordance with the instruction input by the inputting device when the antivibration control of the antivibration control device is stopped.

2. The three-dimensional-camera lens system according to claim 1, wherein
the antivibration optical system is an antivibration lens (40) disposed displaceably in a direction orthogonal to the optical axis of the image-pickup optical system, and the image formation position of the image formed by the image-pickup optical system is changed in the plane of the image-pickup plane by changing the position of the antivibration lens as the state of the antivibration optical system changed by the driving device.

3. The three-dimensional-camera lens system according to claim 1 or 2, wherein
the state of the antivibration optical system when the antivibration control is stopped is a reference state used when the state of the antivibration optical system is to be changed upon execution of the antivibration control.
